# EUROPÄISCHE PATENTSCHRIFT

(11) **EP 3 208 497 B1**
(45) Veröffentlichungstag und Bekanntmachung des Hinweises auf die Patenterteilung: **24.07.2019**
(21) Anmeldenummer: 17153742.6
(22) Anmeldetag: 30.01.2017
(51) Int. Cl.: F16H 63/36, F16H 63/38, F16H 63/34, F16H 63/30

(54) **SCHALTANORDNUNG, KRAFTFAHRZEUGGETRIEBE UND SCHALTANORDNUNGS-MONTAGEVERFAHREN**
SWITCHING ASSEMBLY, VEHICLE TRANSMISSION UNIT AND SWITCHING ASSEMBLY MOUNTING METHOD
DISPOSITIF DE COMMUTATION, BOÎTE DE VITESSES DE VÉHICULE ET PROCÉDÉ DE MONTAGE DU DISPOSITIF DE COMMUTATION

(30) Priorität: 18.02.2016 DE 102016001842
(43) Veröffentlichungstag der Anmeldung: 23.08.2017
(73) Patentinhaber: Magna PT B.V. & Co. KG, 74199 Untergruppenbach (DE)
(72) Erfinder: Dietrich, Frank, 74078 Heilbronn (DE); Gaggia, Salvatore, 70469 Stuttgart-Feuerbach (DE); Cermak, Peter, 74074 Heilbronn (DE); Kupper, Sabrina, 74078 Heilbronn (DE); Rühle, Günter, 74369 Löchgau (DE)
(74) Vertreter: Rausch, Gabriele

(56) Entgegenhaltungen:
- CN-U- 201 696 604
- DE-B- 1 016 997
- DE-B1- 1 750 590
- JP-A- 2004 286 096
- JP-U- S4 850 776
- US-A- 3 945 458

## Beschreibung

Die vorliegende Erfindung betrifft eine Schaltanordnung für ein Kraftfahrzeuggetriebe mit einer Mehrzahl von Gängen, wobei die Gänge mittels der Schaltanordnung ein- und auslegbar sind, mit einem Gehäuse, das eine Längsrichtung definiert, mit einer ersten und einer zweiten Schaltstange, die parallel zueinander angeordnet sind und jeweils in Längsrichtung beweglich in Bezug auf das Gehäuse gelagert sind, derart, dass jede Schaltstange eine Neutralposition und wenigstens eine Gangposition einnehmen kann, und mit einer mechanischen Gangsperranordnung, die zwischen den Schaltstangen wirkt, so dass jeweils nur eine der Schaltstangen eine Gangposition einnehmen kann, wobei die Gangsperranordnung ein Sperrelement aufweist, das in einem Querführungsabschnitt in Bezug auf das Gehäuse in einer Richtung quer zu der Längsrichtung beweglich gelagert ist, wobei das Sperrelement zwischen einer ersten Sperrposition, in der eine Bewegung der ersten Schaltstange aus ihrer Neutralposition heraus gesperrt ist, und einer zweiten Sperrposition beweglich gelagert ist, in der eine Bewegung der zweiten Schaltstange aus ihrer Neutralposition heraus gesperrt ist.

Ferner betrifft die vorliegende Erfindung ein Kraftfahrzeuggetriebe mit einer solchen Schaltanordnung.

Schließlich betrifft die vorliegende Erfindung ein Verfahren zum Montieren einer Schaltanordnung für ein Kraftfahrzeuggetriebe, insbesondere einer Schaltanordnung der oben beschriebenen Art.

Kraftfahrzeuggetriebe mit Schaltanordnungen der oben beschriebenen Art sind im Stand der Technik bekannt.

Die mit derartigen Schaltanordnungen ausgestatteten Kraftfahrzeuggetriebe sind in der Regel als Stufengetriebe in Vorgelegebauweise ausgeführt. Hierbei sind den einzelnen Gängen bzw. Gangstufen jeweils Radsätze zugeordnet, die ein Festrad und ein Losrad aufweisen. Das Losrad ist dabei mittels einer Schaltkupplung mit der zugehörigen Welle verbindbar oder hiervon trennbar, um einen zugeordneten Gang ein- oder auszulegen. Zwei benachbarte Radsätze sind hierbei häufig über ein Schaltkupplungspaket miteinander verbunden, mittels dessen die diesen zwei Radsätzen zugeordneten Gangstufen alternativ ein- und ausgelegt werden können. Hierbei weist das Schaltkupplungspaket in der Regel eine Schaltmuffe auf, die mit einer zugeordneten Schaltstange in Längsrichtung formschlüssig gekoppelt ist. Längsbewegungen der Schaltstange führen folglich zu Bewegungen der Schaltmuffe zwischen einer Neutralposition und zwei gegenüberliegenden Gangpositionen.

Bei Kraftfahrzeuggetrieben, die mehr als zwei Gänge aufweisen, beinhaltet die Schaltanordnung in der Regel zwei oder mehr Schaltstangen. Eine Kopplung zwischen einer solchen Mehrzahl von Schaltstangen und einem Gangschalthebel im Inneren eines Kraftfahrzeuges kann beispielsweise über eine Schaltwelle erfolgen, die beispielsweise zum Anwählen einer Schaltstange axial versetzt (oder verdreht) wird, und zum Längsbewegen einer Schaltstange verdreht (oder axial versetzt) wird.

Um zu vermeiden, dass in derartigen Getrieben mehr als eine Gangstufe gleichzeitig eingelegt wird, beinhalten solche Getriebe häufig mechanische Gangsperranordnungen. Bei Getrieben, die nur zwei Schaltstangen aufweisen, reicht dabei in der Regel ein mechanisches Sperrelement, das in einer Sperrposition die eine Schaltstange gegenüber Bewegungen aus der Neutralposition heraus sperrt, nämlich dann, wenn die andere Schaltstange sich in einer Gangposition befindet.

Bei Kraftfahrzeuggetrieben mit mehr als drei Schaltstangen sind in der Regel komplexere Gangsperranordnungen notwendig, die beispielsweise einen Sperrschieber beinhalten, der mit mehreren Schaltstangen gekoppelt ist (beispielsweise EP 0 306 720 A3).

Sofern die Betätigung von zwei Schaltkupplungen gegeneinander zu sperren ist, kann eine Schaltsperreinrichtung verwendet werden, wie sie aus dem Dokument EP 1 746 313 B1 bekannt geworden ist. Hierbei greift ein an einer Führung verschwenkbares Sperrelement entweder direkt an einer Schaltmuffe eines Schaltkupplungspaketes oder an der anderen Schaltmuffe eines weiteren Schaltkupplungspaketes an, um die Gangsperrfunktion zu realisieren.

Das Dokument DE 29 35 590 A1 offenbart die Verwendung eines Sperrbolzens, der in einer Querführungsanordnung geführt ist und sich zwischen zwei Schaltstangen erstreckt, die jeweils Umfangsnuten aufweisen, derart, dass der Sperrbolzen entweder in die eine Umfangsnut eingreift, so dass die andere Schaltstange frei beweglich ist, oder in die andere Umfangsnut eingreift, so dass die andere Schaltstange axial frei beweglich ist.

Manche Sperranordnungen sind an einem axialen Ende der Schaltstangen angeordnet, wodurch sich der axiale Bauraum, der für das Kraftfahrzeuggetriebe notwendig, vergrößert. Andere Gangsperranordnungen sind nur schwer zu montieren.

DE 1016997A1 betrifft eine Verriegelungs- und Rastanordnung mehrerer Schaltstangen für Zahnräderwechselgetriebe, wobei die Anordnung nach Meinung der Prüfungsabteilung des Europäischen Patentamtes alle Merkmale der Oberbegriffe der Ansprüche 1 und 2 zeigt, und bei der jeweils nur eine Schaltstange verschoben werden kann, während die Bewegung der übrigen Schaltstangen verriegelt ist, wobei in der neutralen Stellung in miteinander fluchtenden Bohrungen der Schaltstangen und des Getriebegehäuses Sperrkörper vorgesehen sind, die in dieser Stellung unter Federwirkung stehen. Sowohl zum Verriegeln als auch zum Rasten der Schaltstangen wird eine einzige in der Ebene der Schaltstangenachsen auf die Sperrkörper wirkende, z.B. von einer Feder herrührende Kraft benötigt.

DE 1750590 A1 beschreibt eine mechanische Schalteinrichtung mit Gesperre für ein Zahnräderwechselgetriebe, wobei die Einrichtung nach Auffassung der Prüfungsabteilung des Europäischen Patentamtes alle Merkmale des Oberbegriffs des Anspruchs 4 zeigt, und bei der in dem parallel verschiebbaren Schaltstangen führenden Gehäuseteil quer zur Bewegungsrichtung der Schaltstangen verschiebbare Stifte mit kugelförmigen Enden als Sperrkörper gelagert sind, die wechselweise in eine Ausnehmung der benachbarten Schaltstangen einrückbar sind. Es ist nur jeweils eine Schaltstange verschiebbar. Der axiale Verschiebungsbereich der Schaltstangen ist durch Anschläge begrenzt, die Schaltstangen sind durch federnde Rastmittel in den Schaltstellungen gehalten. Die Anschläge sind durch Anschlagbunde an den Schaltstangen gebildet, die gleichfalls mit den Sperrkörpern in Anlage geraten.

Vor diesem Hintergrund ist es eine Aufgabe der Erfindung, eine verbesserte Schaltanordnung für ein Kraftfahrzeuggetriebe, ein verbessertes Kraftfahrzeuggetriebe sowie ein verbessertes Schaltanordnungs-Montageverfahren anzugeben, wobei die Schaltanordnung vorzugsweise einfach montierbar ist, keine zusätzliche axiale Baulänge benötigt, einfach realisierbar ist und/oder robust ausführbar ist, um Leichtbauanforderungen gerecht zu werden.

Gemäß einer ersten Ausführungsform wird die obige Aufgabe gelöst durch eine Schaltanordnung für ein Kraftfahrzeuggetriebe der oben genannten Art nach Anspruch 1.

Ferner wird die obige Aufgabe gelöst durch ein Kraftfahrzeuggetriebe nach Anspruch 11. Schließlich wird die obige Aufgabe gelöst durch ein Verfahren zum Montieren einer Schaltanordnung für ein Kraftfahrzeuggetriebe nach Anspruch 12, insbesondere einer Schaltanordnung der erfindungsgemäßen Art, mit den Schritten, eine erste Schaltstange in Bezug auf ein Gehäuse zu lagern, so dass die erste Schaltstange in einer Längsrichtung zwischen einer Neutralposition und wenigstens einer Gangposition beweglich ist, eine zweite Schaltstange in Bezug auf das Gehäuse derart zu lagern, dass die zweite Schaltstange in der Längsrichtung beweglich zwischen einer Neutralposition und wenigstens einer Gangposition ist, wobei die erste Schaltstange eine Durchgangsöffnung aufweist, die quer zu der Längsrichtung verläuft, ein Sperrelement durch die Durchgangsöffnung in der ersten Schaltstange hindurch zu führen und in einen Querführungsabschnitt hinein zu führen, innerhalb dessen das Sperrelement quer zu der Längsrichtung beweglich gelagert ist, und ein Anschlagelement mit der ersten Schaltstange oder mit dem Gehäuse zu verbinden.

Bei der erfindungsgemäßen Schaltanordnung ist der Durchgangsöffnungsquerschnitt der Durchgangsöffnung in der ersten Schaltstange an den Sperrelementquerschnitt des Sperrelementes vorzugsweise so angepasst, dass das Sperrelement in Richtung quer zu der Längsrichtung durch die Durchgangsöffnung hindurchgeführt werden kann, um in den Querführungsabschnitt eingeführt zu werden.

Folglich lässt sich die Schaltanordnung leicht montieren. Insbesondere muss zur Montage kein Gang eingelegt werden. Die Erfindung lässt sich bei geringem Mehrgewicht auf robuste Art und Weise realisieren, wobei insbesondere ein Leichtbau möglich ist.

Die Durchgangsöffnung befindet sich vorzugsweise in einem Bereich zwischen axialen Enden der ersten Schaltstange, so dass kein zusätzlicher axialer Bauraum notwendig ist.

Das Sperrelement greift in der zweiten Sperrposition vorzugsweise in eine Vertiefung in der zweiten Schaltstange, um diese an einer Bewegung aus der Neutralposition heraus zu sperren. In der ersten Sperrposition greift das Sperrelement in die Durchgangsöffnung, und zwar von der Seite der Durchgangsöffnung aus, die der Einführseite gegenüberliegt, über die das Sperrelement durch die Durchgangsöffnung hindurch eingeführt worden ist, oder greift ebenfalls in eine Umfangsnut.

Die zweite Schaltstange kann dabei in Umfangsrichtung frei beweglich sein, wenn zur Einrichtung der zweiten Sperrposition in der zweiten Schaltstange eine Umfangsnut vorhanden ist.

Die erste Schaltstange wird hingegen in einer Variante hinsichtlich ihrer Drehposition in Bezug auf das Gehäuse fixiert, so dass die Durchgangsöffnung in der ersten Schaltstange immer mit dem Sperrelement ausgerichtet ist. Alternativ ist es möglich, auch an der ersten Schaltstange eine Umfangsnut auszubilden, die in diesem Fall vorzugsweise in Längsrichtung mit der Durchgangsöffnung ausgerichtet ist.

Generell ist es natürlich auch möglich, dass auch in der zweiten Schaltstange eine Durchgangsöffnung vorgesehen ist, so dass die Schaltstangen als Gleichteile hergestellt werden können.

Die Schaltstangen weisen vorzugsweise einen runden Querschnitt auf, können jedoch auch einen polygonalen Querschnitt aufweisen. Der Querschnitt der Durchgangsöffnung und der Querschnitt des Sperrelementes sind jeweils ebenfalls vorzugsweise rund, können jedoch ebenfalls polygonal ausgestaltet sein.

Die Durchgangsöffnung kann dabei eine Längsachse der ersten Schaltstange schneiden.

Die erste Schaltstange kann jedoch auch mit einem radialen Ansatz oder Mitnehmer ausgebildet sein, durch den hindurch sich die Durchgangsöffnung erstreckt.

Mit anderen Worten kann die Schaltstange einstückig und stabförmig ausgebildet sein, sie kann jedoch auch mehrteilig ausgebildet sein. Die Schaltstange kann ferner mit radialen und/oder mit axialen Ansätzen oder dergleichen ausgebildet sein.

Das Gehäuse der Schaltanordnung kann ein von einem Gehäuse des Kraftfahrzeuggetriebes separates Gehäuse sein. Das Schaltanordnungsgehäuse kann einteilig oder mehrteilig ausgebildet sein, kann aus einem Gussmaterial, aus einem Metallmaterial oder aus einem Kunststoffmaterial hergestellt sein. Das Schaltanordnungsgehäuse kann insbesondere starr mit einem Kraftfahrzeuggetriebegehäuse verbunden sein, oder einstückig hiermit ausgebildet sein.

Bei der erfindungsgemäßen Schaltanordnung ist der Durchgangsöffnung ein Anschlagelement zugeordnet.

Das Anschlagelement verhindert nach der Montage, dass das Sperrelement durch die Durchgangsöffnung hindurch zurück herausgeschoben wird.

Das Anschlagelement ist dabei in der Querrichtung in Bezug auf das Gehäuse fixiert.

Das Anschlagelement kann ein Bauelement sein, das nach dem Einführen des Sperrelementes durch die Durchgangsöffnung und in den Querführungsabschnitt hinein montiert wird. Dabei ist es von Vorteil, dass sich das Anschlagelement in die Durchgangsöffnung hinein erstreckt.

Das Anschlagelement kann sich dabei insbesondere von der Seite der Durchgangsöffnung in diese hinein erstrecken, von der auch das Sperrelement bei der Montage hineingeführt wird. Der Durchmesser bzw. Querschnitt des Anschlagelementes kann jenem der Durchgangsöffnung entsprechen, kann jedoch auch abschnittsweise kleiner sein als der Querschnitt bzw. der Durchmesser der Durchgangsöffnung.

Das Anschlagelement erstreckt sich dabei vorzugsweise so in die Durchgangsöffnung hinein, dass ein freies Ende des Anschlagelementes gegenüber einem Außenumfang der ersten Schaltstange zurückversetzt ist, so dass die Durchgangsöffnung auf der Seite des Sperrelementes eine Art Vertiefung in der Schaltstange bildet, die hin bis zu dem freien Ende des Anschlagelementes reicht.

Dabei ist es von Vorteil, dass das Anschlagelement mit der ersten Schaltstange verbunden ist.

Insbesondere ist es bevorzugt, wenn das Anschlagelement lösbar mit der ersten Schaltstange verbunden ist. Die Verbindung kann jedoch auch eine feste, unlösbare Verbindung sein, beispielsweise in Form einer Schweißverbindung.

Besonders bevorzugt ist es jedoch, wenn das Anschlagelement an der ersten Schaltstange lösbar verbunden ist, indem es an der Schaltstange verrastet wird oder an die Schaltstange geschraubt wird. Insbesondere ist es bevorzugt, wenn das Anschlagelement ein Außengewinde aufweist, wobei in der Durchgangsöffnung vorzugsweise in diesem Fall ein Innengewindeabschnitt vorhanden ist, in den hinein der Außengewindeabschnitt des Anschlagelementes eingeschraubt werden kann, um dieses lösbar mit der ersten Schaltstange zu verbinden.

Die Aufgabe wird somit vollkommen gelöst.

Gemäß einer alternativen Ausführungsform wird die obige Aufgabe durch eine Schaltanordnung gem. Anspruch 2, der die Schaltanordnung mittels eines mit dem Gehäuse verbundenen Anschlagelements definiert, gelöst. Die Verbindung zwischen dem Anschlagelement und dem Gehäuse kann eine unlösbare Verbindung sein, wie eine Schweißverbindung, ist jedoch vorzugsweise eine lösbare Verbindung, beispielsweise eine Rastverbindung, eine Steckverbindung, und insbesondere eine Schraubverbindung, bei der ein Gewindeabschnitt des Anschlagelementes in einen Gewindeabschnitt des Gehäuses eingeschraubt wird.

Für den Fall, dass das Anschlagelement mit dem Gehäuse verbunden ist, ist es bevorzugt, wenn die Durchgangsöffnung ein Langloch aufweist, das relative Längsbewegungen zwischen dem Anschlagelement und der ersten Schaltstange ermöglicht.

Da die erste Schaltstange in Längsrichtung beweglich in Bezug auf das Gehäuse gelagert ist, kann sich das Anschlagelement folglich in die Durchgangsöffnung hinein erstrecken, und bildet in der ersten Sperrposition vorzugsweise einen Boden einer Vertiefung in der ersten Schaltstange, die durch die Durchgangsöffnung gebildet ist.

Sofern sich die erste Schaltstange in einer der Gangpositionen befindet, ist das Anschlagelement innerhalb des Langloches hin zu einem axialen Ende hiervon verschoben.

Dabei kann das Anschlagelement zusammen mit dem Langloch wenigstens einen Axialanschlag bilden, und zwar für wenigstens eine Gangposition.

Ein Durchmesser des Anschlagelementes ist im Bereich der Durchgangsöffnung vorzugsweise kleiner als ein Durchmesser der Durchgangsöffnung, wobei das Langloch vorzugsweise eine Breite aufweist, die an den Durchmesser des Anschlagelementes angepasst ist, wobei diese Breite kleiner ist als der Durchmesser der Durchgangsöffnung.

Gemäß einer weiteren insgesamt bevorzugten Ausführungsform weist das Gehäuse eine Gehäuseöffnung auf, wobei die erste Schaltstange so in Bezug auf die Gehäuseöffnung verschiebbar ist, dass die Durchgangsöffnung mit der Gehäuseöffnung ausrichtbar ist.

Bei dieser Ausführungsform kann das Sperrelement somit bei der Montage von außerhalb des Gehäuses durch die Getriebeöffnung hindurch und durch die Durchgangsöffnung hindurch in den Querführungsabschnitt eingeführt werden.

Bei dem erfindungsgemäßen Verfahren ist es folglich bevorzugt, wenn das Sperrelement zunächst durch eine in dem Gehäuse ausgebildete Gehäuseöffnung hindurchgeführt wird, bevor es durch die Durchgangsöffnung in der ersten Schaltstange hindurchgeführt wird.

Das Gehäuse kann insbesondere das Kraftfahrzeuggetriebegehäuse sein. Folglich kann das Sperrelement von außerhalb des Getriebegehäuses montiert werden.

Die Getriebeöffnung wird nach dem Montageschritt vorzugsweise durch ein Verschlusselement abgedichtet. Bei dem Verschlusselement kann es sich um einen einfachen Stopfen handeln.

In einer bevorzugten Variante kann das Verschlusselement jedoch gleichzeitig das Anschlagelement bilden, das sich durch die Gehäuseöffnung und in die Durchgangsöffnung der ersten Schaltstange hinein erstreckt.

Gemäß einem weiteren Aspekt der Erfindung wird die obige Aufgabe gelöst durch eine Schaltanordnung für ein Kraftfahrzeuggetriebe nach Anspruch 4, mit einer Mehrzahl von Gängen, wobei die Gänge mittels der Schaltanordnung ein- und auslegbar sind, mit einem Gehäuse, das eine Längsrichtung definiert, mit einer ersten und einer zweiten Schaltstange, die parallel zueinander angeordnet sind und jeweils in Längsrichtung beweglich in Bezug auf das Gehäuse gelagert sind, derart, dass jede Schaltstange eine Neutralposition und wenigstens eine Gangposition einnehmen kann, und mit einer mechanischen Gangsperranordnung, die zwischen den Schaltstangen wirkt, so dass jeweils nur eine der Schaltstangen eine Gangposition einnehmen kann, wobei die Gangschaltanordnung ein Sperrelement aufweist, das in einem Querführungsabschnitt in Bezug auf das Gehäuse in einer Richtung quer zu der Längsrichtung beweglich gelagert ist, wobei das Sperrelement zwischen einer ersten Sperrposition, in der eine Bewegung der ersten Schaltstange aus ihrer Neutralposition heraus gesperrt ist, und einer zweiten Sperrposition beweglich gelagert ist, in der eine Bewegung der zweiten Schaltstange aus ihrer Neutralposition heraus gesperrt ist, wobei die erste Schaltstange einen ersten Axialabschnitt und einen zweiten Axialabschnitt aufweist, der mit dem ersten Axialabschnitt verbunden ist, wobei eine axiale Länge des ersten Axialabschnittes an eine Axialposition des Querführungsabschnittes angepasst ist, wobei die erste Schaltstange zweiteilig ausgebildet ist mit einem ersten Axialabschnitt und einem zweiten Axialabschnitt, der mit dem ersten Axialabschnitt nach der Montage des Sperrelements verbunden ist, wobei eine axiale Länge des ersten Axialabschnittes an eine Axialposition des Querführungsabschnittes angepasst ist und so dimensioniert ist, dass das Sperrelement durch eine Gehäuseöffnung in den Querführungsabschnitt einführbar ist.

Bei diesem weiteren Aspekt Erfindung wird ferner ein Verfahren zum Montieren einer Schaltanordnung für ein Kraftfahrzeuggetriebe nach Anspruch 14 bereitgestellt, insbesondere zum Montieren einer Schaltanordnung gemäß dem zweiten Aspekt der Erfindung, mit den Schritten, eine erste Schaltwelle bereitzustellen, die zwei miteinander verbindbare Axialabschnitte aufweist, und den ersten Axialabschnitt in Bezug auf ein Gehäuse so zu lagern, dass der erste Axialabschnitt in einer Längsrichtung entlang einer ersten Schaltstangenachse beweglich ist, eine zweite Schaltwelle in Bezug auf das Gehäuse zu lagern, derart, dass die zweite Schaltstange in der Längsrichtung beweglich zwischen einer Neutralposition und wenigstens einer Gangposition ist, ein Sperrelement quer zu der ersten Schaltstangeachse in einen Querführungsabschnitt hinein zu führen, innerhalb dessen das Sperrelement quer zu der Längsrichtung beweglich gelagert ist, und den zweiten Axialabschnitt der ersten Schaltwelle mit dem ersten Axialabschnitt zu verbinden, so dass das Sperrelement in Querrichtung zwischen den Schaltstangen beweglich ist.

Der zweite Axialabschnitt der ersten Schaltstange bildet folglich eine Art Axialansatz, der erst nach der Montage des Sperrelementes mit dem ersten Axialabschnitt verbunden wird. Der erste Axialabschnitt ist dabei in Bezug auf das Gehäuse so dimensioniert und gelagert, dass das Sperrelement durch eine Gehäuseöffnung in den Querführungsabschnitt einführbar ist.

Mit der Schaltanordnung und dem zugeordneten Verfahren gemäß dem weiteren Aspekt der Erfindung können im Wesentlichen die gleichen Vorteile erzielt werden wie bei dem ersten Aspekt der Erfindung.

Der erste Axialabschnitt der ersten Schaltwelle bildet die wesentlichen Funktionen der ersten Schaltwelle ab, ist also vorzugsweise mit einem Mitnehmer zum Betätigen einer Schaltkupplung gekoppelt.

Gemäß einer bevorzugten Ausführungsform des zweiten Aspektes der Erfindung definiert der zweite Axialabschnitt die erste Sperrposition für das Sperrelement.

Folglich weist der zweite Axialabschnitt vorzugsweise eine Radialvertiefung auf, in die das Sperrelement in der ersten Sperrposition eindringen kann.

Gemäß einer weiteren bevorzugten Ausführungsform weist das Gehäuse eine verschließbare Öffnung zum Einführen des zweiten Axialabschnittes auf.

Der zweite Axialabschnitt kann folglich montiert werden, nachdem die zweite Schaltstange und der erste Axialabschnitt bereits in dem Gehäuse axial verschieblich gelagert worden sind, wobei die zweite Schaltstange und der erste Axialabschnitt in ihrer jeweiligen Neutralposition gehalten bzw. angeordnet sein können, wenn das Sperrelement montiert wird. Diese Neutralposition kann vorteilhafterweise auch dann aufrecht erhalten werden, wenn der zweite Axialabschnitt mit dem ersten Axialabschnitt verbunden wird.

Die verschließbare Öffnung ist vorzugsweise mit einer Führung für die erste Schaltstange ausgerichtet. Die verschließbare Öffnung ist vorzugsweise eine Axialöffnung in dem Gehäuse und ist vorzugsweise mittels eines Stopfens oder dergleichen verschließbar.

Der erste Axialabschnitt und der zweite Axialabschnitt werden vorzugsweise über einen Gewindestift und eine Gewindebohrung miteinander verschraubt, können jedoch auch auf andere Art und Weise miteinander verbunden werden.

Sowohl bei dem ersten Aspekt als auch bei dem zweiten Aspekt der Erfindung kann an der zweiten Schaltstange eine Durchgangsöffnung ausgebildet sein, der vorzugsweise ein Anschlagelement zugeordnet ist.

Von besonderem Vorzug ist es jedoch bei dem ersten und bei dem weiteren Aspekt der Erfindung, wenn der Querführungsabschnitt derart mit der zweiten Schaltstange ausgerichtet ist, dass das Sperrelement in der zweiten Sperrposition direkt an der zweiten Schaltstange anschlagen kann.

Die zweite Schaltstange weist zu diesem Zweck vorzugsweise eine Vertiefung, insbesondere eine Umfangsnut auf, in die das Sperrelement in der zweiten Sperrposition eindringen kann.

Eine Achse der Querführungsanordnung kann dabei windschief zu einer Längsachse der zweiten Schaltstange ausgebildet sein. In diesem Fall kann die Schaltstange mit einem radial vorstehenden Absatz ausgebildet sein, gegen den das Sperrelement anschlagen kann und an dem eine Quervertiefung ausgebildet sein kann, in den das Sperrelement zur Einrichtung der zweiten Sperrposition eintauchen kann.

Von besonderem Vorzug ist es jedoch, wenn eine Längsachse des Querführungsabschnittes eine Längsachse der zweiten Schaltstange schneidet.

Der Querführungsabschnitt kann durch ein von dem Gehäuse separates Bauteil gebildet sein. Von besonderem Vorzug ist es jedoch, wenn der Querführungsabschnitt durch das Gehäuse gebildet ist, an dem auch vorzugsweise die Schaltstangen gelagert sind.

Generell ist es bei dem ersten und bei dem zweiten Aspekt der Erfindung bevorzugt, wenn die Schaltstangen und das Sperrelement in einem abgedichteten Raum des Gehäuses gelagert sind.

Der abgedichtete Raum kann dabei insbesondere H-förmig sein, mit zwei parallelen Raumabschnitten zur Aufnahme der Schaltstangen und einem diese verbindenden Querabschnitt zur Aufnahme des Sperrelementes.

Ausführungsbeispiele der Erfindung sind in der Zeichnung dargestellt und werden in der nachfolgenden Beschreibung näher erläutert. Es zeigen:
Fig. 1 : eine schematische Darstellung eines Kraftfahrzeugantriebstranges mit einem Kraftfahrzeuggetriebe, das eine erfindungsgemäße Schaltanordnung aufweist;
Fig. 2 : eine schematische Schnittansicht durch eine weitere Ausführungsform einer erfindungsgemäßen Schaltanordnung;
Fig. 3 : eine Teilansicht in einer der Fig. 2 vergleichbaren Darstellung, und zwar einer weiteren Ausführungsform einer erfindungsgemäßen Schaltanordnung;
Fig. 4 : eine Schnittansicht entlang der Linie IV-IV der Fig. 3 ;
Fig. 5 : eine schematische Querschnittsansicht durch eine weitere Ausführungsform einer erfindungsgemäßen Schaltanordnung; und
Fig. 6 : eine Schnittansicht entlang der Linie VI-VI der Fig. 5 ;
Fig. 7 : eine der Fig. 2 vergleichbare schematische Schnittansicht durch eine Ausführungsform einer Schaltanordnung gemäß dem zweiten Aspekt der Erfindung;
Fig. 8 : eine schematische Schnittansicht entlang der Linie VIII-VIII der Fig. 7 ; und
Fig. 9 : eine schematische Schnittansicht entlang der Linie IX-IX der Fig. 7 .

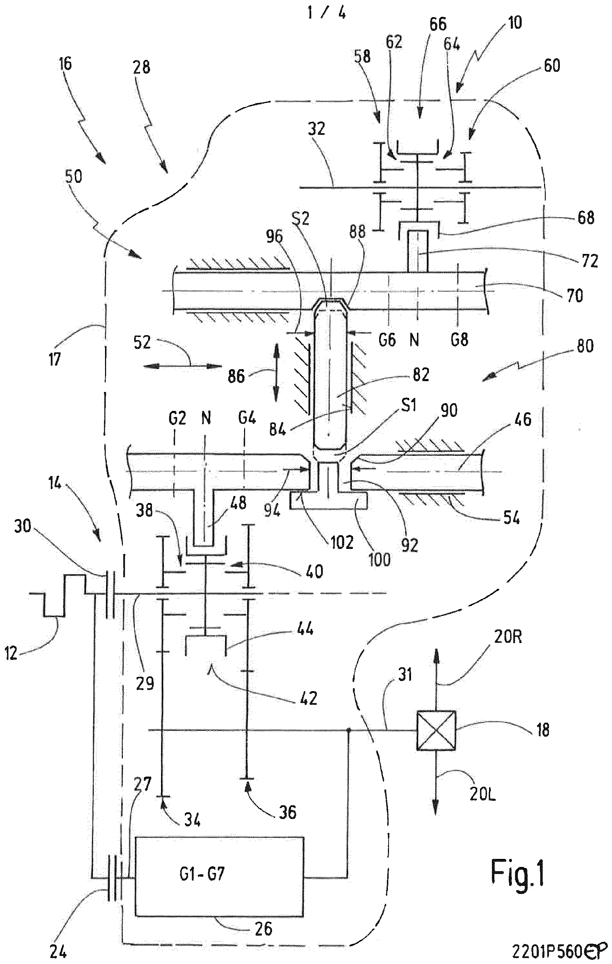

In Fig. 1 ist ein Antriebsstrang für ein Kraftfahrzeug schematisch dargestellt und generell mit 10 bezeichnet.

Der Antriebsstrang 10 weist einen Antriebsmotor 12 auf, der einen Verbrennungsmotor beinhalten kann und/oder einen Elektromotor. Ferner beinhaltet der Antriebsstrang eine Kopplungsanordnung 14, die als Einfachkupplung oder als Doppelkupplung ausgebildet sein kann. Eingangsseitig ist die Kupplungsanordnung 14 mit dem Antriebsmotor 12 verbunden. Ausgangsseitig ist die Kupplungsanordnung 14 mit einer Getriebeanordnung 16 verbunden, die ein schematisch angedeutetes Gehäuse 17 aufweist.

Ein Ausgang der Getriebeanordnung 16, die dazu ausgebildet ist, mehrere Vorwärtsgangstufen bzw. Gänge G1-G8 und wenigstens eine Rückwärtsgangstufe einzurichten, ist mit einem Differential 18 verbunden, mittels dessen Antriebsleistung auf angetriebene Räder 20L, 20R verteilbar ist.

Die Kupplungsanordnung 14 ist vorliegend als Doppelkupplungsanordnung ausgebildet und weist eine erste Reibkupplung 24 auf. In entsprechender Weise ist die Getriebeanordnung 16 als Doppelkupplungsgetriebe ausgebildet, das ein erstes Teilgetriebe 26 aufweist, dessen Eingangswelle 27 mit einem Ausgangsglied der ersten Reibkupplung 24 verbunden ist.

Das Doppelkupplungsgetriebe der Getriebeanordnung 16 beinhaltet ferner ein zweites Teilgetriebe 28, das eine zweite Eingangswelle 29 aufweist, die mit dem Ausgangsglied einer zweiten Reibkupplung 30 der Kupplungsanordnung 14 verbunden ist.

Das erste Teilgetriebe 26 beinhaltet ungerade Vorwärtsgangstufen G1, G3, G5 und G7. Das zweite Teilgetriebe 28 beinhaltet gerade Vorwärtsgangstufen G2, G4, G6, G8. Eine Rückwärtsgangstufe kann einem der zwei Teilgetriebe 26, 28 zugeordnet sein.

In Fig. 1 ist ferner eine weitere Welle 32 des zweiten Teilgetriebes 28 gezeigt. Die Anordnung der Wellen des zweiten Teilgetriebes 28 ist vorliegend rein beispielhaft und in keiner Weise einschränkend zu verstehen. Es versteht sich, dass die Teilgetriebe 26, 28 jeweils als Stufengetriebe in Vorgelegebauweise realisiert sind, so dass die einzelnen Gänge durch Radsätze gebildet sind, die jeweils wenigstens zwei Wellen miteinander verbinden, wobei jeder Radsatz ein Festrad, das mit einer Welle verbunden ist und ein Losrad aufweist, das drehbar an der anderen Welle gelagert ist.

Vorliegend verbindet ein Radsatz 34 für die Gangstufe G2 die zweite Eingangswelle 29 und die Ausgangswelle 31 der Getriebeanordnung 16. Die weitere Welle 32 kann beispielsweise über entsprechende Radsätze ebenfalls mit der Ausgangswelle 31 verbunden sein. Das Doppelkupplungsgetriebe der Getriebeanordnung 16 kann dabei als Getriebe für den Einbau in Längsrichtung in einem Fahrzeug ausgelegt sein, kann jedoch auch als Mehrwellengetriebe für den Einbau in einem Kraftfahrzeug in Querrichtung ausgelegt sein.

Das zweite Teilgetriebe 28 beinhaltet ferner einen Radsatz 36 für die Gangstufe G4. Zum Schalten des Radsatzes 34 für die Gangstufe G2 ist eine Schaltkupplung 38 vorgesehen. Zum Schalten des Radsatzes 36 für die Gangstufe G4 ist eine Schaltkupplung 40 vorgesehen. Die Schaltkupplungen 38, 40 sind in ein erstes Schaltkupplungspaket 42 integriert, das mittels einer ersten Schaltmuffe 44 betätigbar ist. Die erste Schaltmuffe 44 ist über einen ersten Mitnehmer mit einer ersten Schaltstange 46 gekoppelt.

Die Schaltkupplungen 38, 40, das Schaltkupplungspaket 42, die Schaltmuffe 44 sowie die erste Schaltstange 46 mit dem daran angebrachten ersten Mitnehmer 48 bilden einen Teil einer Schaltanordnung 50.

Die Schaltanordnung 50 ist an einem Schaltanordnungsgehäuse 54 ausgebildet, das eine Längsrichtung 52 definiert.

Die erste Schaltstange 46 ist an dem Schaltanordnungsgehäuse 54 in Längsrichtung 52 verschieblich gelagert, so dass bei einem Versetzen der ersten Schaltstange 46 aus der in Fig. 1 dargestellten Neutralposition N durch axiales Verschieben in die eine Richtung entweder ein Losrad des Radsatzes 34 mit der zugeordneten Welle 29 verbunden werden kann, um die Gangstufe G2 einzurichten, oder das Losrad des Radsatzes 36 mit der zugeordneten Welle 29 verbunden werden kann, um die Gangstufe G4 einzurichten.

Das zweite Teilgetriebe 28 beinhaltet ferner einen Radsatz 58 für die Gangstufe G6 und einen Radsatz 60 für die Gangstufe G8. Der Radsatz 58 ist, in gleicher Weise wie die oben beschriebenen Radsätze, mittels einer Schaltkupplung 62 schaltbar. Der Radsatz 60 für die Gangstufe G8 ist mittels einer weiteren Schaltkupplung 64 schaltbar. Die Schaltkupplungen 62, 64 sind in ein zweites Schaltkupplungspaket 66 integriert, das eine zweite Schaltmuffe 68 aufweist.

Die zweite Schaltmuffe 68 ist mit einem zweiten Mitnehmer 72 einer zweiten Schaltstange 70 gekoppelt. Die zweite Schaltstange 70 ist parallel zu der ersten Schaltstange 46 in Längsrichtung verschieblich an dem Schaltanordnungsgehäuse 54 gelagert. Aus der in Fig. 1 gezeigten Neutralposition N kann die zweite Schaltstange 70 entweder in eine Längsrichtung verschoben werden, um die Gangstufe G6 einzulegen, oder in die andere Richtung verschoben werden, um die Gangstufe G8 einzulegen.

Die Schaltstangen 46, 70 werden vorzugsweise mittels nicht näher dargestellter Aktuatoren betätigt, können jedoch auch von Hand geschaltet sein. Die Aktuatorik kann hydraulische Schaltzylinder beinhalten oder elektromotorische Antriebe. Beispielsweise kann jedem Teilgetriebe 26, 28 eine eigene Schaltwalze zugeordnet sein.

Insbesondere sind die zwei Schaltstangen 46, 70 jedoch unabhängig voneinander betätigbar, beispielsweise mittels den Schaltstangen 46, 70 jeweils zugeordneten einzelnen Aktuatoren.

In Doppelkupplungsgetrieben ist es möglich, dass zwei Gangstufen gleichzeitig eingelegt sind. Beispielsweise kann bei einem Fahrbetrieb über eine der Gangstufen in dem ersten Teilgetriebe 26 in dem anderen inaktiven Teilgetriebe eine weitere Gangstufe eingelegt (vorgewählt) werden, wobei in diesem Fall die einem solchen inaktiven Teilgetriebe zugeordnete Reibkupplung geöffnet ist. Die eigentlichen Gangwechsel erfolgen dann durch überschneidende Betätigung der zwei Reibkupplungen 24, 30, wobei die Antriebsleistung von einem Teilgetriebe auf das andere übertragen wird.

Auch bei einem solchen Doppelkupplungsgetriebe sind jedoch Vorkehrungen zu treffen, damit nicht gleichzeitig zwei Gangstufen ein und desselben Teilgetriebes eingelegt werden.

Zu diesem Zweck beinhaltet das zweite Teilgetriebe 28 eine Gangsperranordnung 80. Das erste Teilgetriebe 26 kann eine entsprechende Gangsperranordnung beinhalten, wobei sich die nachfolgende Beschreibung der Gangsperranordnung 80 für das zweite Teilgetriebe in gleicher Weise auf das erste Teilgetriebe 26 beziehen kann.

Die Gangsperranordnung 80 beinhaltet ein Sperrelement 82, das an dem Schaltanordnungsgehäuse 54 in einem Querführungsabschnitt 84 verschieblich gelagert ist, derart, dass das Sperrelement 82 in einer Querrichtung 86 beweglich ist.

In der zweiten Schaltstange 70 ist eine Vertiefung 88 vorgesehen, in die ein Ende des Sperrelementes 82, das vorliegend vorzugsweise als Stift oder Stabelement ausgebildet ist, eindringen kann. Wenn das eine Ende des Sperrelementes 82 in die Vertiefung 88 der zweiten Schaltstange 70 eingreift, wird eine Längsbewegung der zweiten Schaltstange 70 gesperrt. Das Sperrelement 82 nimmt dabei eine zweite Sperrposition S2 ein, wie es auch in Fig. 1 dargestellt ist. Die zweite Sperrposition S2 verhindert folglich ein Bewegen der zweiten Schaltstange 70 aus der Neutralposition N heraus, so dass in der zweiten Sperrposition S2 weder die Gangstufe G6 noch die Gangstufe G8 eingelegt werden kann.

In entsprechender Weise beinhaltet die erste Schaltstange 46 eine Vertiefung 90, in die ein entgegengesetztes Ende des Sperrelementes 82 eingebracht werden kann, um eine erste Sperrposition S1 einzurichten, die in Fig. 1 in gestrichelten Linien dargestellt ist. In der ersten Sperrposition S1 wird durch das Eindringen des Sperrelementes 82 in die Vertiefung 90 eine Bewegung der ersten Schaltstange 46 aus der Neutralposition N heraus verhindert.

In Fig. 1 ist die zweite Schaltposition S2 in durchgezogenen Linien dargestellt. In dieser Position kann die erste Schaltstange 46 frei in Längsrichtung bewegt werden. Umgekehrt kann bei Einrichten der ersten Sperrposition S1 die zweite Schaltstange 70 in Längsrichtung frei bewegt werden.

Die Vertiefung 88 der zweiten Schaltstange 70 kann als einfache Radialvertiefung an der zweiten Schaltstange 70 ausgebildet sein, kann jedoch auch als Umfangsnut ausgebildet sein.

Die Vertiefung 90 der ersten Schaltstange 46 kann ebenfalls als einfache Radialvertiefung ausgebildet sein, kann jedoch auch eine Umfangsnut beinhalten. Die Umfangsnuten sind an ihren Rändern vorzugsweise so abgeschrägt, dass das Sperrelement durch Krafteinwirkung der Ränder in Querrichtung 86 versetzbar ist.

Vorliegend beinhaltet die erste Schaltstange 46 eine Durchgangsöffnung 92, die sich in Richtung quer zu der Längsrichtung 52 durch die erste Schaltstange 46 hindurch erstreckt.

Die Schaltstange 46 (wie auch die Schaltstange 70) sind jeweils schematisch als längliche, runde Stangen dargestellt. Die Durchgangsöffnung 92 kann sich dabei durch eine nicht näher bezeichnete Längsachse der ersten Schaltstange 46 hindurch erstrecken, kann jedoch auch an einem nicht näher bezeichneten Mitnehmer radialen oder axialen Vorsprung ausgebildet sein. Beispielsweise kann die Durchgangsöffnung 92 auch an dem ersten Mitnehmer 48 ausgebildet sein, zu welchem Zweck der erste Mitnehmer 48 in axialer Richtung mit dem Querführungsabschnitt 84 ausgerichtet wird.

Die Durchgangsöffnung 92 weist einen Durchmesser 94 auf, der an einen Durchmesser 96 des Sperrelementes 82 derart angepasst ist, dass das Sperrelement 82 zur Montage in dem Querführungsabschnitt 84 durch die Durchgangsöffnung 92 hindurch geschoben werden kann.

Die Montage des Sperrelementes 82 kann dabei vorzugsweise in der in Fig. 1 gezeigten Neutralposition der ersten Schaltstange 46 und in der in Fig. 1 gezeigten Neutralposition der zweiten Schaltstange 70 durchgeführt werden.

Um ein Herausfallen des Sperrelementes 82 aus dem Querführungsabschnitt 84 zu verhindern und um vorzugsweise die erste Sperrposition S1 zu definieren, wird der Durchgangsöffnung 92 ein Anschlagelement 100 zugeordnet. Das Anschlagelement 100 erstreckt sich in die Durchgangsöffnung 92 hinein, und zwar von der Seite aus, von der aus auch das Sperrelement 82 in den Querführungsabschnitt 84 eingeführt worden ist. Mit anderen Worten kann das Anschlagelement 100 die Durchgangsöffnung 92 verschließen, zumindest teilweise.

Das Anschlagelement 100 erstreckt sich dabei vorzugsweise soweit in die Durchgangsöffnung 92 hinein, so dass in dem Bereich der Vertiefung 90 ein Boden dieser Vertiefung 90 durch das Anschlagelement 100 gebildet wird.

Alternativ ist es möglich, dass sich das Anschlagelement bis zu einem Außenradius der ersten Schaltstange 46 erstreckt, wobei in diesem Fall an dem Außenumfang der ersten Schaltstange 46 vorzugsweise eine weitere nicht näher dargestellte Vertiefung 90 vorgesehen ist, die beispielsweise als Umfangsnut ausgebildet sein kann.

Die zweite Schaltstange 70 kann dann, wenn die Vertiefung 88 durch eine Umfangsnut gebildet ist, in Drehrichtung um ihre Längsachse herum frei verdrehbar gelagert sein.

Die erste Schaltstange 46 kann dann, wenn axial ausgerichtet mit der Durchgangsöffnung 92 am Außenumfang ebenfalls eine Umfangsnut vorgesehen ist, ebenfalls in Drehrichtung überwiegend frei verdrehbar gelagert sein.

Das Anschlagelement 100 kann entweder an dem Gehäuse 54 montiert werden, wird jedoch in der vorliegenden Ausführungsform an der ersten Schaltstange 46 festgelegt. Eine Verbindung 102 zwischen dem Anschlagelement 100 und der ersten Schaltstange 46 ist in Fig. 1 schematisch angedeutet. Die Verbindung kann eine unlösbare Verbindung sein, kann jedoch auch eine lösbare Verbindung sein. Ein in die Durchgangsöffnung 92 nach der Art einer Madenschraube eingeschraubtes Anschlagelement 100 ist eine besonders bevorzugte Variante. Hierbei kann die Gangsperranordnung 80 mit geringem Gewicht realisiert werden.

Es ist jedoch auch, wie in Fig. 1 schematisch angedeutet möglich, dass das Anschlagelement 100 nach der Art einer Schraube mit einem Kopf und einem Schaft ausgebildet ist, wobei der Schaft in die Durchgangsöffnung 92 hineinragt und der Kopf an einem Außenumfang der ersten Schaltwelle 46 festgelegt ist.

Eine Durchgangsöffnung 92 kann in gleicher Weise auch an der zweiten Schaltstange 70 ausgebildet sein.

Das Schaltanordnungsgehäuse 54 kann ein eigenes Gehäuse sein, das von einem Gehäuse 17 der Getriebeanordnung 16 unabhängig ausgebildet ist. Das Schaltanordnungsgehäuse 54 kann jedoch auch zumindest abschnittsweise durch das Gehäuse 17 der Getriebeanordnung 16 gebildet sein.

Sofern die Schaltstange 46 nur an ihren Enden mittels des Schaltanordnungsgehäuses 54 gelagert ist, kann eine Ausbildung einer Durchgangsöffnung 90 zur Montage des Sperrelementes 82 hinreichend sein.

Das Schaltanordnungsgehäuse 54 kann sich jedoch auch über die gesamte axiale Länge der ersten Schaltstange 46 erstrecken. In diesem Fall ist es bevorzugt, wenn auch in dem Schaltanordnungsgehäuse 54 eine Gehäuseöffnung ausgebildet ist, durch die hindurch das Sperrelement 82 montiert werden kann, derart, dass es zunächst durch eine solche Gehäuseöffnung hindurch und dann durch die Durchgangsöffnung 90 hindurch eingeschoben wird, um in dem Querführungsabschnitt 84 montiert zu werden.

In manchen Fällen kann, wie oben erwähnt, das Schaltanordnungsgehäuse 54 zumindest teilweise durch das Gehäuse 17 der Getriebeanordnung 16 gebildet sein. In diesem Fall ist es bevorzugt, wenn eine solche Gehäuseöffnung an einer Außenwand des Gehäuses 17 ausgebildet ist, derart, dass das Sperrelement 82 von außerhalb des Gehäuses 17 montiert werden kann. Es versteht sich in diesem Fall, dass eine solche Gehäuseöffnung dann durch geeignete Maßnahmen fluiddicht verschlossen wird.

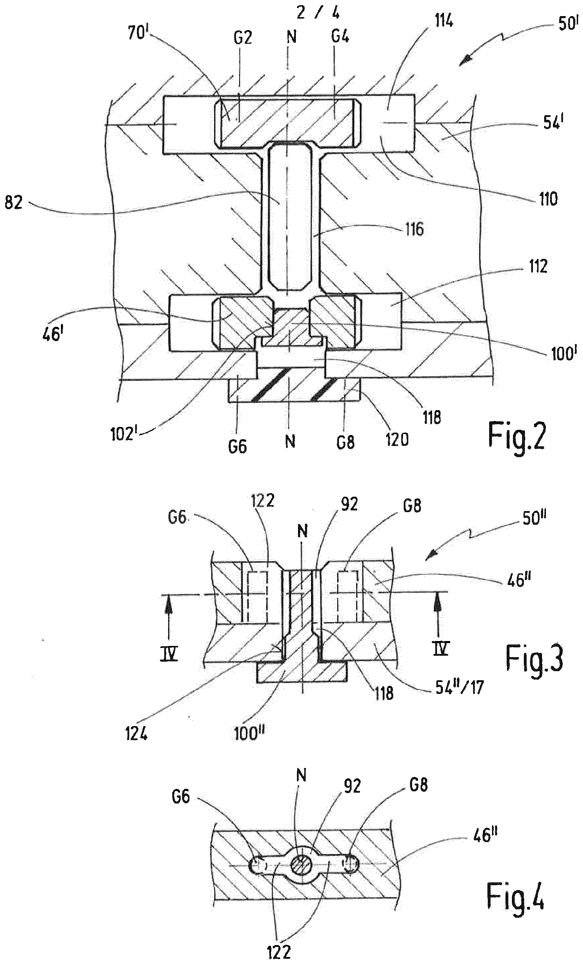

Vorliegend ist das Sperrelement 82 direkt zwischen den Schaltstangen 46, 70 angeordnet, derart, dass eine Längsachse des Sperrelementes 82 Längsachsen der Schaltstangen 46, 70 schneidet. Die Längsachse des Sperrelementes kann jedoch auch windschief zu der Längsachse der ersten Schaltwelle 46 und/oder windschief zu der Längsachse der zweiten Schaltstange 70 ausgerichtet werden. In diesem Fall können an den Schaltstangen 46, 70 gegebenenfalls radiale Vorsprünge ausgebildet sein, die die Vertiefungen 80, 90 definieren. Nachstehend werden weitere Ausführungsformen von Schaltanordnungen unter Bezugnahme auf die Fig. 2 bis 6 beschrieben, die hinsichtlich Aufbau und Funktionsweise generell der Schaltanordnung 50 der Fig. 1 entsprechen. Gleiche Elemente sind daher durch gleiche Bezugszeichen gekennzeichnet. Im Folgenden werden im Wesentlichen die Unterschiede erläutert.

Fig. 2 zeigt eine Schaltanordnung 50', bei der in dem Schaltanordnungsgehäuse 54' ein Schaltstangenraum 110 ausgebildet ist, der eine erste Schaltstangenführung 112 für die erste Schaltstange 46' sowie eine zweite Schaltstangenführung 114 für die zweite Schaltstange 70' beinhaltet. Die zwei Schaltstangenführungen 112, 114 sind über eine Querführung 116 miteinander verbunden, so dass eine H-Form des Schaltstangenraumes 110 realisiert wird. Der Schaltstangenraum 110 kann gegenüber der Umgebung abgedichtet sein.

Zu diesem Zweck kann in dem Schaltanordnungsgehäuse 54' eine Gehäuseöffnung 118 ausgebildet sein, über die das Sperrelement 82 einführbar ist, und zwar durch die in Fig. 2 nicht näher bezeichnete Durchgangsöffnung in der ersten Schaltstange 46' hindurch und in die Querführung 116 hinein.

Ein Anschlagelement 100' kann dabei in die erste Schaltstange 46' geschraubt sein, und zwar mittels einer Verbindung 102' wie eine Gewindeverbindung.

In Fig. 2 ist ferner dargestellt, dass die Gehäuseöffnung 118 durch einen Verschlussstopfen 120 verschließbar ist, so dass der Schaltstangenraum 110 fluiddicht abgeschlossen werden kann.

Die Gehäuseöffnung 118 kann jedoch auch von einem Außenbereich eines Kraftfahrzeuggetriebes in einen Innenraum des Kraftfahrzeuggetriebes führen, so dass das Sperrelement 82 von außerhalb des Gehäuses 17 montiert werden kann. In diesem Fall dient der Verschlussstopfen 120 dazu, das Gehäuse 17 der Getriebeanordnung 16 abzudichten. Die Abdichtung ist insbesondere eine öldichte Abdichtung.

In den Fig. 3 und 4 ist eine weitere Ausführungsform einer Schaltanordnung 50" gezeigt.

Bei der Ausführungsform der Fig. 3 und 4 ist in der ersten Schaltstange 46' ein sich mit der Durchgangsöffnung 92 überschneidendes Langloch 122 ausgebildet.

Vorliegend ist ein Anschlagelement 100" vorgesehen, das nach dem Einführen des Sperrelementes 82 von außen an dem Gehäuse 54" (bzw. dem Gehäuse 17) festgelegt ist, und zwar insbesondere durch eine Schraubverbindung 124, bei der ein Außengewindeabschnitt des Anschlagelementes 100" in einen Innengewindeabschnitt der Gehäuseöffnung 118 eingeschraubt ist. Ein Schaftabschnitt mit einem kleineren Durchmesser als der Durchmesser der Gehäuseöffnung 118 erstreckt sich ausgehend von diesem Gewindeabschnitt in die Durchgangsöffnung 92 hinein, wobei das Anschlagelement 100" die gleiche Funktion erfüllt wie bei den obigen Ausführungsformen.

Um Längsbewegungen der Schaltstange 46" zu ermöglichen, ist das Langloch 122 vorgesehen, so dass der in die Durchgangsöffnung 92 ragende dünne Schaftabschnitt bei solchen Längsbewegungen aus der Neutralstellung N heraus in das Langloch 122 eindringt, wie es schematisch in Fig. 4 dargestellt ist.

Die Schaltanordnung 50" lässt sich mit besonders wenigen Bauteilen realisieren und kann zu einer besonders einfachen Montage führen. Ein Kopf des schraubenartigen Anschlagelementes 100" kann dabei beispielsweise an einem Außenumfang des Gehäuses 54" anliegen, beispielsweise über eine nicht näher dargestellte Dichtung.

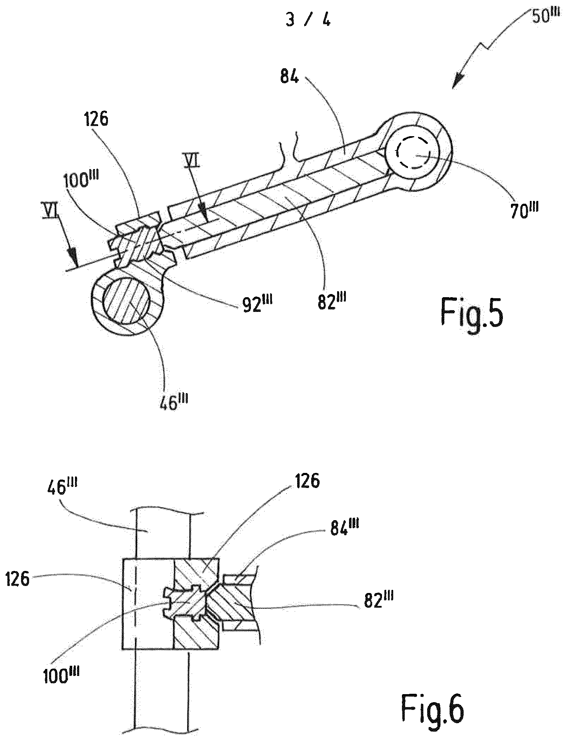

In den Fig. 5 und 6 ist eine weitere Ausführungsform einer Schaltanordnung 50'" gezeigt. Diese entspricht hinsichtlich Aufbau und Funktionsweise generell der Schaltanordnung 50' der Fig. 2 . Hierbei ist jedoch vorgesehen, dass an der ersten Schaltwelle 46"' ein Schaltstangenansatz oder -mitnehmer 126 ausgebildet ist, der einen sich um die Schaltstange 46"' herum erstreckenden Befestigungsabschnitt sowie einen radial vorstehenden Abschnitt aufweist. An dem radial vorstehenden Abschnitt ist die Durchgangsöffnung 92"' ausgebildet, über die das Sperrelement 82"' in den Querführungsabschnitt 84 eingeführt werden kann, wobei die Durchgangsöffnung 92'" anschließend durch ein Anschlagelement 100'" versperrt werden kann, das nach der Art einer Madenschraube ausgebildet sein kann.

Eine Längsachse des Querführungsabschnittes 84 ist bei der Ausführungsform der Fig. 5 und 6 windschief zu einer Längsachse der ersten Schaltwelle 46"' ausgerichtet.

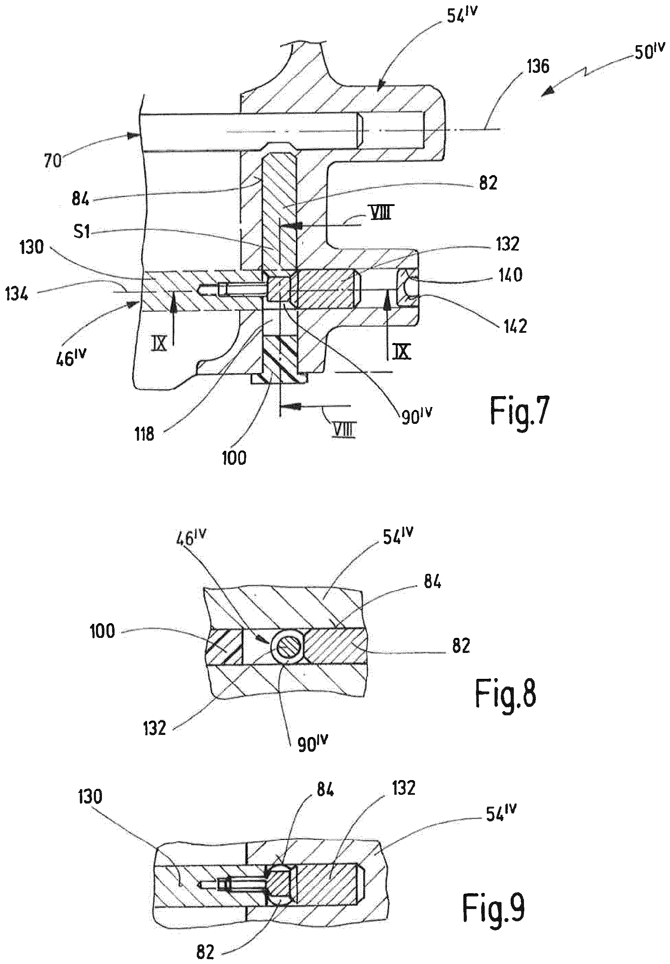

In den Fig. 7 bis 9 ist eine weitere Ausführungsform einer Schaltanordnung 50^{IV} gemäß einem zweiten Aspekt der Erfindung dargestellt.

Die Schaltanordnung 50^{IV} entspricht hinsichtlich Aufbau und Funktionsweise generell den oben beschriebenen Ausführungsformen. Gleiche Elemente sind daher durch gleiche Bezugsziffern gekennzeichnet. Im Folgenden werden im Wesentlichen die Unterschiede erläutert.

Bei der Schaltanordnung 50^{IV} weist die erste Schaltstange 46^{IV} keine Durchgangsöffnung 92 auf. Stattdessen wird eine Montage des Sperrelements 82 in einer Position, bei der sich die Schaltstangen 46^{IV}, 70 in ihrer Neutralposition befinden, ermöglicht, indem die erste Schaltstange 46^{IV} zweiteilig ausgebildet ist, mit einem ersten Axialabschnitt 130 und einem zweiten, mit dem ersten Axialabschnitt 130 verbindbaren Axialabschnitt 132.

Die Axialabschnitte 130, 132 sind in einer Führung des Gehäuses 54^{IV} aufgenommen, die entlang einer ersten Schaltstangenachse 134 ausgerichtet ist. Die zweite Schaltstange 70 ist in einer Führung aufgenommen, die entlang einer zweiten Schaltstangenachse 136 ausgerichtet ist.

An dem Gehäuse 54^{IV} ist eine Axialöffnung 140 ausgebildet, über die zumindest der zweite Axialabschnitt 132 in die zugeordnete Führung entlang der ersten Schaltstangenachse 134 eingeführt werden kann. Die axiale Öffnung 140 ist nach der Montage des zweiten Axialabschnittes 132 mittels eines Stopfens 142 verschlossen.

Wie bei den Ausführungsformen zuvor weist das Gehäuse 54^{IV} eine Gehäuseöffnung 118 auf, über die das Sperrelement 82 in Querrichtung montierbar ist. Die Montage des Sperrelementes 82 erfolgt, bevor der zweite Axialabschnitt 132 über die Axialöffnung 140 eingeführt wird, so dass die zweite Schaltstange 70 und der erste Axialabschnitt 130 der ersten Schaltstange 46^{IV} in ihrer Neutralposition sein können, wenn das Sperrelement 82 montiert wird.

Nach der Montage des zweiten Axialabschnittes 132 bildet dieser einen Anschlag für das Sperrelement 82. Zu diesem Zweck weist der zweite Axialabschnitt 132 eine Vertiefung 90^{IV} auf, in die das Sperrelement 82 zum Einrichten der ersten Sperrposition S1 (wie in Fig. 7 dargestellt) greifen kann.

In der zweiten Sperrposition (in den Fig. 7 bis 9 nicht dargestellt) ist die erste Schaltstange 46^{IV} mit dem starr verbundenen Axialabschnitten 130, 132 innerhalb ihrer Führung axial bzw. in Längsrichtung verschieblich, so dass mittels der ersten Schaltstange 130 nicht nur die Neutralposition sondern auch wenigstens eine Gangposition eingerichtet werden können.

## Patentansprüche

1. Schaltanordnung (50, 50') für ein Kraftfahrzeuggetriebe (16) mit einer Mehrzahl von Gängen (G1-G8), wobei die Gänge (G1-G8) mittels der Schaltanordnung (50, 50') ein- und auslegbar sind, mit
- einem Gehäuse (54, 54'), das eine Längsrichtung (52) aufweist,
- einer ersten und einer zweiten Schaltstange (46, 46', 70, 70'), die parallel zueinander angeordnet sind und jeweils in Längsrichtung (52) beweglich in Bezug auf das Gehäuse (54, 54') gelagert sind, derart, dass jede Schaltstange (46, 70) eine Neutralposition (N) und wenigstens eine Gangposition (G2, G4; G6, G8) einnehmen kann, und
- einer mechanischen Gangsperranordnung (80), die zwischen den Schaltstangen (46, 46', 70, 70') wirkt, so dass jeweils nur eine der Schaltstangen (46, 46', 70, 70') eine Gangposition einnehmen kann, wobei die Gangsperranordnung (80) ein Sperrelement (82) aufweist, das in einem Querführungsabschnitt (84) in Bezug auf das Gehäuse (54, 54') in einer Richtung (86) quer zu der Längsrichtung (52) beweglich gelagert ist, wobei das Sperrelement (82) zwischen einer ersten Sperrposition (S1), in der eine Bewegung der ersten Schaltstange (46, 46') aus ihrer Neutralposition (N) heraus gesperrt ist, und einer zweiten Sperrposition (S2) in der eine Bewegung der zweiten Schaltstange (70, 70') aus ihrer Neutralposition (N) heraus gesperrt ist, beweglich gelagert ist, wobei wenigstens die erste Schaltstange (46, 46') eine Durchgangsöffnung (92) aufweist, deren Durchgangsöffnungsquerschnitt (94) an einen Sperrelementquerschnitt (96) des Sperrelementes (82) angepasst ist,
wobei der Durchgangsöffnung (92) ein Anschlagelement (100, 100') zugeordnet ist, das die erste Sperrposition (S1) für das Sperrelement (82) definiert, und wobei sich das Anschlagelement (100, 100') in die Durchgangsöffnung (92) hinein erstreckt, **dadurch gekennzeichnet, dass** das Anschlagelement (100; 100") mit der ersten Schaltstange (46, 46') verbunden ist.

2. Schaltanordnung (50") für ein Kraftfahrzeuggetriebe (16) mit einer Mehrzahl von Gängen (G1-G8), wobei die Gänge (G1-G8) mittels der Schaltanordnung (50") ein- und auslegbar sind, mit
- einem Gehäuse (54"), das eine Längsrichtung (52) aufweist,
- einer ersten und einer zweiten Schaltstange (46", 70), die parallel zueinander angeordnet sind und jeweils in Längsrichtung (52) beweglich in Bezug auf das Gehäuse (54") gelagert sind, derart, dass jede Schaltstange (46", 70) eine Neutralposition (N) und wenigstens eine Gangposition (G2, G4; G6, G8) einnehmen kann, und
- einer mechanischen Gangsperranordnung (80), die zwischen den Schaltstangen (46", 70) wirkt, so dass jeweils nur eine der Schaltstangen (46", 70) eine Gangposition einnehmen kann, wobei die Gangsperranordnung (80) ein Sperrelement (82) aufweist, das in einem Querführungsabschnitt (84) in Bezug auf das Gehäuse (54") in einer Richtung (86) quer zu der Längsrichtung (52) beweglich gelagert ist, wobei das Sperrelement (82) zwischen einer ersten Sperrposition (S1), in der eine Bewegung der ersten Schaltstange (46") aus ihrer Neutralposition (N) heraus gesperrt ist, und einer zweiten Sperrposition, in der eine Bewegung der zweiten Schaltstange (70) aus ihrer Neutralposition (N) heraus gesperrt ist, beweglich gelagert ist,
wobei wenigstens die erste Schaltstange (46") eine Durchgangsöffnung (92) aufweist, deren Durchgangsöffnungsquerschnitt (94) an einen Sperrelementquerschnitt (96) des Sperrelementes (82) angepasst ist, wobei der Durchgangsöffnung (92) ein Anschlagelement (100") zugeordnet ist, das die erste Sperrposition (S1) für das Sperrelement (82) definiert, und wobei sich das Anschlagelement (100") in die Durchgangsöffnung (92) hinein erstreckt, wobei das Anschlagelement (100") mit dem Gehäuse (54") verbunden ist, **dadurch gekennzeichnet, dass** die Durchgangsöffnung (92) ein Langloch (122) aufweist, das relative Längsbewegungen zwischen Anschlagelement (100") und erster Schaltstange (46") ermöglicht.

3. Schaltanordnung nach einem der Ansprüche 1 oder 2, **dadurch gekennzeichnet, dass** das Gehäuse (54, 54") eine Gehäuseöffnung (118) aufweist, wobei die erste Schaltstange (46, 46") so in Bezug auf die Gehäuseöffnung (118) verschiebbar ist, dass die Durchgangsöffnung (92) mit der Gehäuseöffnung (118) ausrichtbar ist.

4. Schaltanordnung (50^{IV}) für ein Kraftfahrzeuggetriebe (16) mit einer Mehrzahl von Gängen (G1-G8), wobei die Gänge (G1-G8) mittels der Schaltanordnung (50^{IV}) ein- und auslegbar sind, mit
- einem Gehäuse (54^{IV}), das eine Längsrichtung (52) aufweist,
- einer ersten und einer zweiten Schaltstange (46^{IV}, 70), die parallel zueinander angeordnet sind und jeweils in Längsrichtung (52) beweglich in Bezug auf das Gehäuse (54^{IV}) gelagert sind, derart, dass jede Schaltstange (46^{IV}, 70) eine Neutralposition (N) und wenigstens eine Gangposition (G2, G4; G6, G8) einnehmen kann, und
- einer mechanischen Gangsperranordnung (80), die zwischen den Schaltstangen (46^{IV}, 70) wirkt, so dass jeweils nur eine der Schaltstangen (46^{IV}, 70) eine Gangposition einnehmen kann, wobei die Gangsperranordnung (80) ein Sperrelement (82) aufweist, das in einem Querführungsabschnitt (84) in Bezug auf das Gehäuse (54^{IV}) in einer Richtung (86) quer zu der Längsrichtung (52) beweglich gelagert ist, wobei das Sperrelement (82) zwischen einer ersten Sperrposition (S1), in der eine Bewegung der ersten Schaltstange (46^{IV}) aus ihrer Neutralposition (N) heraus gesperrt ist, und einer zweiten Sperrposition (S2), in der eine Bewegung der zweiten Schaltstange (70) aus ihrer Neutralposition (N) heraus gesperrt ist, beweglich gelagert ist,
**dadurch gekennzeichnet, dass** die erste Schaltstange (46^{IV}) zweiteilig, mit einem ersten Axialabschnitt (130) und einem zweiten Axialabschnitt (132) ausgebildet ist, wobei der zweite Axialabschnitt (132) mit dem ersten Axialabschnitt (130) nach der Montage des Sperrelements (82) verbunden ist, und wobei eine axiale Länge des ersten Axialabschnittes (130) an eine Axialposition des Querführungsabschnittes (84) angepasst ist und so dimensioniert ist, dass das Sperrelement (82) durch eine Gehäuseöffnung in den Querführungsabschnitt (84) einführbar ist.

5. Schaltanordnung nach Anspruch 4, **dadurch gekennzeichnet, dass** der zweite Axialabschnitt (132) die erste Sperrposition (S1) für das Sperrelement (82) definiert.

6. Schaltanordnung nach Anspruch 4 oder 5, **dadurch gekennzeichnet, dass** das Gehäuse (54^{IV}) eine verschließbare Öffnung zum Einführen des zweiten Axialabschnittes (132) aufweist.

7. Schaltanordnung nach einem der Ansprüche 1 bis 6, **dadurch gekennzeichnet, dass** der Querführungsabschnitt (84) derart mit der zweiten Schaltstange (70) ausgerichtet ist, dass das Sperrelement (82) in der zweiten Sperrposition (S2) direkt an der zweiten Schaltstange (70) anschlagen kann.

8. Schaltanordnung nach Anspruch 7, **dadurch gekennzeichnet, dass** eine Längsachse des Querführungsabschnittes (84) eine Längsachse der zweiten Schaltstange (70) schneidet.

9. Schaltanordnung nach einem der Ansprüche 1 bis 8, **dadurch gekennzeichnet, dass** der Querführungsabschnitt (84) durch das Gehäuse (54, 54", 54^{IV}) gebildet ist.

10. Schaltanordnung nach einem der Ansprüche 1 bis 9, **dadurch gekennzeichnet, dass** die Schaltstangen (46, 46", 46^{IV}, 70) und das Sperrelement (82) in einem abgedichteten Raum (110) des Gehäuses (54, 54", 54^{IV}) gelagert sind.

11. Kraftfahrzeuggetriebe (16) mit einer Schaltanordnung (50, 50", 50^{IV}) nach einem der Ansprüche 1 bis 10.

12. Verfahren zum Montieren einer Schaltanordnung (50, 50", 50^{IV}) für ein Kraftfahrzeuggetriebe (16), nach einem der Ansprüche 1 oder 2 oder nach einem der Ansprüche 3, 7 bis 10 mit Bezug auf Anspruch 1 oder 2, mit den Schritten:
- Lagern einer ersten Schaltstange (46, 46',46 ^{IV}) in Bezug auf ein Gehäuse (54, 54", 54 ^{IV}), so dass die erste Schaltstange (46, 46',46 ^{IV}) in einer Längsrichtung (52) zwischen einer Neutralposition (N) und wenigstens einer Gangposition (G6, G8) beweglich ist,
- Lagern einer zweiten Schaltwelle (70) in Bezug auf das Gehäuse (54, 54", 54^{IV}), derart, dass die zweite Schaltstange (70) in der Längsrichtung (52) beweglich zwischen einer Neutralposition (N) und wenigstens einer Gangposition (G2, G4) ist,
- wobei die erste Schaltstange (46, 46',46 ^{IV}) eine Durchgangsöffnung (92) aufweist, die quer zu der Längsrichtung (52) verläuft,
- Führen eines Sperrelementes (82) durch die Durchgangsöffnung (92) in der ersten Schaltstange (46) hindurch und in einen Querführungsabschnitt (84) hinein, innerhalb dessen das Sperrelement (82) quer zu der Längsrichtung (52) beweglich gelagert ist, und
- Verbinden eines Anschlagelementes (100, 100") mit der ersten Schaltstange (46) oder mit dem Gehäuse (54, 54", 54 ^{IV}).

13. Verfahren nach Anspruch 12, wobei das Sperrelement (82) zunächst durch eine in dem Gehäuse (54, 54", 54^{IV}) ausgebildete Gehäuseöffnung (118) hindurchgeführt wird, bevor es durch die Durchgangsöffnung (92) in der ersten Schaltstange (46, 46',46^{IV}) hindurchgeführt wird.

14. Verfahren zum Montieren einer Schaltanordnung (50^{IV}) für ein Kraftfahrzeuggetriebe (16), nach einem der Ansprüche 4 oder 5 bis 10 mit Bezug auf Anspruch 4 mit den Schritten:
- Bereitstellen einer ersten Schaltwelle (46^{IV}), die zwei miteinander verbindbare Axialabschnitte (130,132) aufweist, und Lagern des ersten Axialabschnittes (130) in Bezug auf ein Gehäuse (54), so dass der erste Axialabschnitt (130) in einer Längsrichtung (52) entlang einer ersten Schaltstangenachse (134) beweglich ist,
- Lagern einer zweiten Schaltwelle (70) in Bezug auf das Gehäuse (54^{IV}), derart, dass die zweite Schaltstange (70) in der Längsrichtung (52) beweglich zwischen einer Neutralposition und wenigstens einer Gangposition ist,
- Führen eines Sperrelementes (82) quer zu der ersten Schaltstangenachse (134) in einen Querführungsabschnitt (84) hinein, innerhalb dessen das Sperrelement (82) quer zu der Längsrichtung (52) beweglich gelagert ist, und
- Verbinden des zweiten Axialabschnittes (132) mit dem ersten Axialabschnitt (130), so dass das Sperrelement in Querrichtung zwischen den Schaltstangen (46^{IV}, 70) beweglich ist.

## Claims

1. Switching assembly (50, 50') for a motor vehicle transmission (16) having a plurality of gears (G1-G8) wherein the gears (G1-G8) can be engaged and disengaged by means of the switching assembly (50, 50'), comprising
- a housing (54, 54') which has a longitudinal direction (52),
- a first and a second switch rod (46, 46', 70, 70'), which are arranged parallel to each other and are each mounted such that they can be moved relative to the housing (54, 54') in the longitudinal direction (52) in such a way that each switch rod (46, 70) can assume a neutral position (N) and at least one gear position (G2, G4; G6, G8), and
- a mechanical gear blocking assembly (80), which acts between the switch rods (46, 46', 70, 70') so that respectively only one of the switch rods (46, 46', 70, 70') can assume a gear position, wherein the gear blocking assembly (80) has a blocking element (82), which is mounted in a transverse guide section (84) such that it can be moved relative to the housing (54, 54') in a direction (86) transverse to the longitudinal direction (52), wherein the blocking element (82) is mounted such that it can be moved between a first blocking position (S1), in which a movement of the first switch rod (46, 46') out of its neutral position (N) is blocked, and a second blocking position (S2), in which a movement of the second switch rod (70, 70') out of its neutral position (N) is blocked, wherein at least the first switch rod (46, 46') has a passage opening (92), of which the passage opening cross section (94) is matched to a blocking element cross section (96) of the blocking element (82),
wherein the passage opening (92) is assigned a stop element (100, 100'), which defines the first blocking position (S1) for the blocking element (82), and wherein the stop element (100, 100') extends into the passage opening (92),
**characterized in that** the stop element (100, 100') is connected to the first switch rod (46, 46').

2. Switching assembly (50") for a motor vehicle transmission (16) having a plurality of gears (G1-G8) wherein the gears (G1-G8) can be engaged and disengaged by means of the switching assembly (50"), comprising
- a housing (54") which has a longitudinal direction (52),
- a first and a second switch rod (46", 70), which are arranged parallel to each other and are each mounted such that they can be moved relative to the housing (54") in the longitudinal direction (52) in such a way that each switch rod (46", 70) can assume a neutral position (N) and at least one gear position (G2, G4; G6, G8), and
- a mechanical gear blocking assembly (80), which acts between the switch rods (46", 70) so that respectively only one of the switch rods (46", 70) can assume a gear position, wherein the gear blocking assembly (80) has a blocking element (82), which is mounted in a transverse guide section (84) such that it can be moved relative to the housing (54") in a direction (86) transverse to the longitudinal direction (52), wherein the blocking element (82) is mounted such that it can be moved between a first blocking position (S1), in which a movement of the first switch rod (46") out of its neutral position (N) is blocked, and a second blocking position, in which a movement of the second switch rod (70) out of its neutral position (N) is blocked, wherein at least the first switch rod (46") has a passage opening (92), of which the passage opening cross section (94) is matched to a blocking element cross section (96) of the blocking element (82),
wherein the passage opening (92) is assigned a stop element (100"), which defines the first blocking position (S1) for the blocking element (82), and wherein the stop element (100") extends into the passage opening (92), wherein the stop element (100") is connected to the housing (54"), **characterized in that** the passage opening (92) has a slot (122), which permits relative longitudinal movements between stop element (100") and first switch rod (46").

3. Switching assembly according to either of Claims 1 and 2, **characterized in that** the housing (54, 54") has a housing opening (118), wherein the first switch rod (46, 46") can be displaced relative to the housing opening (118) such that the passage opening (92) can be aligned with the housing opening (118).

4. Switching assembly (50^{IV}) for a motor vehicle transmission (16) having a plurality of gears (G1-G8) wherein the gears (G1-G8) can be engaged and disengaged by means of the switching assembly (50^{IV}), comprising
- a housing (54^{IV}) which has a longitudinal direction (52),
- a first and a second switch rod (46^{IV}, 70), which are arranged parallel to each other and are each mounted such that they can be moved relative to the housing (54^{IV}) in the longitudinal direction (52) in such a way that each switch rod (46^{IV}, 70) can assume a neutral position (N) and at least one gear position (G2, G4; G6, G8), and
- a mechanical gear blocking assembly (80), which acts between the switch rods (46^{IV}, 70) so that respectively only one of the switch rods (46^{IV}, 70) can assume a gear position, wherein the gear blocking assembly (80) has a blocking element (82), which is mounted in a transverse guide section (84) such that it can be moved relative to the housing (54^{IV}) in a direction (86) transverse to the longitudinal direction (52), wherein the blocking element (82) is mounted such that it can be moved between a first blocking position (S1), in which a movement of the first switch rod (46^{IV}) out of its neutral position (N) is blocked, and a second blocking position (S2), in which a movement of the second switch rod (70) out of its neutral position (N) is blocked,
**characterized in that** the first switch rod (46^{IV}) is formed in two parts, having a first axial section (130) and a second axial section (132), wherein the second axial section (132) is connected to the first axial section (130) following the assembly of the blocking element (82), and
wherein an axial length of the first axial section (130) is matched to an axial position of the transverse guide section (84) and is dimensioned such that the blocking element (82) can be inserted into the transverse guide section (84) through a housing opening.

5. Switching assembly according to Claim 4, **characterized in that** the second axial section (132) defines the first blocking position (S1) for the blocking element (82).

6. Switching assembly according to Claim 4 or 5, **characterized in that** the housing (54^{IV}) has a closable opening for the insertion of the second axial section (132).

7. Switching assembly according to one of Claims 1 to 6, **characterized in that** the transverse guide section (84) is aligned with the second switch rod (70) in such a way that the blocking element (82) can strike the second switch rod (70) directly in the second blocking position (S2).

8. Switching assembly according to Claim 7, **characterized in that** a longitudinal axis of the transverse guide section (84) intersects a longitudinal axis of the second switch rod (70).

9. Switching assembly according to one of Claims 1 to 8, **characterized in that** the transverse guide section (84) is formed by the housing (54, 54", 54^{IV}).

10. Switching assembly according to one of Claims 1 to 9, **characterized in that** the switch rods (46, 46", 46^{IV} 70) and the blocking element (82) are mounted in a sealed space (110) of the housing (54, 54", 54^{IV}).

11. Motor vehicle transmission (16) having a switching assembly (50, 50", 50^{IV}) according to one of Claims 1 to 10.

12. Method for mounting a switching assembly (50, 50", 50^{IV}) for a motor vehicle transmission (16) according to one of Claims 1 or 2 or according to one of Claims 3, 7 to 10 with reference to Claim 1 or 2, comprising the steps:
- mounting a first switch rod (46, 46', 46^{IV}) in relation to a housing (54, 54", 54^{IV}) so that the first switch rod (46, 46', 46^{IV}) can be moved in the longitudinal direction (52) between a neutral position (N) and at least one gear position (G6, G8),
- mounting a second switch shaft (70) in relation to the housing (54, 54", 54^{IV}) in such a way that the second switch rod (70) can be moved in the longitudinal direction (52) between a neutral position (N) and at least one gear position (G2, G4),
- wherein the first switch rod (46, 46', 46^{IV}) has a passage opening (92) which extends transversely to the longitudinal direction (52)
- guiding a blocking element (82) through the passage opening (92) in the first switch rod (46) and into a transverse guide section (84), within which the blocking element (82) is mounted such that it can be moved transversely to the longitudinal direction (52), and
- connecting a stop element (100, 100") to the first switch rod (46) or to the housing (54, 54", 54^{IV}).

13. Method according to Claim 12, wherein the blocking element (82) is first led through a housing opening (118) formed in the housing (54, 54", 54^{IV}), before it is led through the passage opening (92) in the first switch rod (46, 46', 46^{IV}).

14. Method for mounting a switching assembly (50^{IV}) for a motor vehicle transmission (16) according to one of Claims 4 or 5 to 10 with reference to Claim 4, comprising the steps:
- providing a first switch shaft (46^{IV}), which has two axial sections (130, 132) that can be connected to each other, and mounting the first axial section (130) in relation to a housing (54), so that the first axial section (130) can be moved in a longitudinal direction (52) along a first switch rod axis (134),
- mounting a second switch shaft (70) in relation to the housing (54^{IV}) in such a way that the second switch rod (70) can be moved in the longitudinal direction (52) between a neutral position and at least one gear position,
- guiding a blocking element (82) transversely to the first switch rod axis (134) into a transverse guide section (84), within which the blocking element (82) is mounted such that it can be moved transversely to the longitudinal direction (52), and
- connecting the second axial section (132) to the first axial section 130), so that the blocking element can be moved in the transverse direction between the switch rods (46^{IV}, 70).

## Revendications

1. Dispositif de changement de vitesses (50, 50') pour une boîte de vitesses (16) de véhicule automobile comprenant une pluralité de rapports (G1-G8), dans lequel les rapports (G1-G8) peuvent être enclenchés et désenclenchés au moyen du dispositif de changement de vitesses (50, 50'), comportant
- un carter (54, 54') qui présente une direction longitudinale (52),
- une première et une deuxième tige de changement de vitesses (46, 46', 70, 70') qui sont disposées parallèlement l'une à l'autre et sont montées respectivement de manière mobile dans la direction longitudinale (52) par rapport au carter (54, 54') de telle sorte que chaque tige de changement de vitesses (46, 70) puisse adopter une position neutre (N) et au moins une position de rapport (G2, G4 ; G6, G8) et
- un dispositif de blocage de rapport mécanique (80) qui agit entre les tiges de changement de vitesses (46, 46', 70, 70') de telle sorte que respectivement seulement l'une des tiges de changement de vitesses (46, 46', 70, 70') puisse adopter une position de rapport, dans lequel le dispositif de blocage de rapport (80) comprend un élément de blocage (82) qui est monté de manière mobile dans une partie de guidage transversale (84) par rapport au carter (54, 54') dans une direction (86) transversale à la direction longitudinale (52), dans lequel l'élément de blocage (82) est monté de manière mobile entre une première position de blocage (S1) dans laquelle un déplacement de la première tige de changement de vitesses (46, 46') hors de sa position neutre (N) est bloqué et une deuxième position de blocage (S2) dans laquelle un déplacement de la deuxième tige de changement de vitesses (70, 70') hors de sa position neutre (N) est bloqué, dans lequel au moins la première tige de changement de vitesses (46, 46') comprend une ouverture traversante (92) dont la section transversale (94) est adaptée à une section transversale (96) de l'élément de blocage (82),
dans lequel un élément de butée (100, 100') est associé à l'ouverture traversante (92), lequel définit la première position de blocage (S1) pour l'élément de blocage (82), et dans lequel l'élément de butée (100, 100') s'étend à l'intérieur de l'ouverture traversante (92),
**caractérisé en ce que** l'élément de butée (100 ; 100") est relié à la première tige de changement de vitesses (46, 46').

2. Dispositif de changement de vitesses (50") pour une boîte de vitesses (16) de véhicule automobile comprenant une pluralité de rapports (G1-G8), dans lequel les rapports (G1-G8) peuvent être enclenchés et désenclenchés au moyen du dispositif de changement de vitesses (50"), comportant
- un carter (54") qui présente une direction longitudinale (52),
- une première et une deuxième tige de changement de vitesses (46", 70) qui sont disposées parallèlement l'une à l'autre et sont montées respectivement de manière mobile dans la direction longitudinale (52) par rapport au carter (54") de telle sorte que chaque tige de changement de vitesses (46", 70) puisse adopter une position neutre (N) et au moins une position de rapport (G2, G4 ; G6, G8) et
- un dispositif de blocage de rapport mécanique (80) qui agit entre les tiges de changement de vitesses (46", 70) de telle sorte que respectivement seulement l'une des tiges de changement de vitesses (46", 70) puisse adopter une position de rapport, dans lequel le dispositif de blocage de rapport (80) comprend un élément de blocage (82) qui est monté de manière mobile dans une partie de guidage transversale (84) par rapport au carter (54") dans une direction (86) transversale à la direction longitudinale (52), dans lequel l'élément de blocage (82) est monté de manière mobile entre une première position de blocage (S1) dans laquelle un déplacement de la première tige de changement de vitesses (46") hors de sa position neutre (N) est bloqué et une deuxième position de blocage dans laquelle un déplacement de la deuxième tige de changement de vitesses (70) hors de sa position neutre (N) est bloqué,
dans lequel au moins la première tige de changement de vitesses (46") comprend une ouverture traversante (92) dont la section transversale (94) est adaptée à une section transversale (96) de l'élément de blocage (82), dans lequel un élément de butée (100") est associé à l'ouverture traversante (92), lequel définit la première position de blocage (S1) pour l'élément de blocage (82), et dans lequel l'élément de butée (100") s'étend à l'intérieur de l'ouverture traversante (92), dans lequel l'élément de butée (100") est relié au carter (54"),
**caractérisé en ce que** l'ouverture traversante (92) comprend un trou oblong (122) qui permet des déplacements longitudinaux relatifs entre l'élément de butée (100") et la première tige de changement de vitesses (46").

3. Dispositif de changement de vitesses selon la revendication 1 ou 2, **caractérisé en ce que** le carter (54, 54") comprend une ouverture (118), la première tige de changement de vitesses (46, 46") étant déplaçable par rapport à l'ouverture de carter (118) de telle sorte que l'ouverture traversante (92) puisse être alignée avec l'ouverture de carter (118).

4. Dispositif de changement de vitesses (50^{IV}) pour une boîte de vitesses (16) de véhicule automobile comprenant une pluralité de rapports (G1-G8), dans lequel les rapports (G1-G8) peuvent être enclenchés et désenclenchés au moyen du dispositif de changement de vitesses (50^{IV}), comportant
- un carter (54^{IV}) qui présente une direction longitudinale (52),
- une première et une deuxième tige de changement de vitesses (46^{IV}, 70) qui sont disposées parallèlement l'une à l'autre et sont montées respectivement de manière mobile dans la direction longitudinale (52) par rapport au carter (54 ^{IV}) de telle sorte que chaque tige de changement de vitesses (46^{IV}, 70) puisse adopter une position neutre (N) et au moins une position de rapport (G2, G4 ; G6, G8) et
- un dispositif de blocage de rapport mécanique (80) qui agit entre les tiges de changement de vitesses (46 ^{IV}, 70) de telle sorte que respectivement seulement l'une des tiges de changement de vitesses (46^{IV}, 70) puisse adopter une position de rapport, dans lequel le dispositif de blocage de rapport (80) comprend un élément de blocage (82) qui est monté de manière mobile dans une partie de guidage transversale (84) par rapport au carter (54 ^{IV}) dans une direction (86) transversale à la direction longitudinale (52), dans lequel l'élément de blocage (82) est monté de manière mobile entre une première position de blocage (S1) dans laquelle un déplacement de la première tige de changement de vitesses (46^{IV}) hors de sa position neutre (N) est bloqué et une deuxième position de blocage (S2) dans laquelle un déplacement de la deuxième tige de changement de vitesses (70) hors de sa position neutre (N) est bloqué,
**caractérisé en ce que** la première tige de changement de vitesses (46^{IV}) est formée en deux parties avec une première partie axiale (130) et une deuxième partie axiale (132), la deuxième partie axiale (132) étant reliée à la première partie axiale (130) après le montage de l'élément de blocage (82), et
une longueur axiale de la première partie axiale (130) étant adaptée à une position axiale de la partie de guidage transversale (84) et étant dimensionnée de telle sorte que l'élément de blocage (82) puisse être introduit dans la partie de guidage transversale (84) à travers une ouverture de carter.

5. Dispositif de changement de vitesses selon la revendication 4, **caractérisé en ce que** la deuxième partie axiale (132) définit la première position de blocage (S1) pour l'élément de blocage (82).

6. Dispositif de changement de vitesses selon la revendication 4 ou 5, **caractérisé en ce que** le carter (54^{IV}) comprend une ouverture pouvant être fermée pour l'introduction de la deuxième partie axiale (132).

7. Dispositif de changement de vitesses selon l'une des revendications 1 à 6, **caractérisé en ce que** la partie de guidage transversale (84) est alignée avec la deuxième tige de changement de vitesses (70) de telle sorte que l'élément de blocage (82) dans la deuxième position de blocage (S2) puisse buter directement contre la deuxième tige de changement de vitesses (70).

8. Dispositif de changement de vitesses selon la revendication 7, **caractérisé en ce qu'**un axe longitudinal de la partie de guidage transversale (84) croise un axe longitudinal de la deuxième tige de changement de vitesses (70).

9. Dispositif de changement de vitesses selon l'une des revendications 1 à 8, **caractérisé en ce que** la partie de guidage transversale (84) est formée par le carter (54, 54", 54^{IV}).

10. Dispositif de changement de vitesses selon l'une des revendications 1 à 9, **caractérisé en ce que** les tiges de changement de vitesses (46, 46", 46 ^{IV}, 70) et l'élément de blocage (82) sont montés dans un espace (110) fermé hermétiquement du carter (54, 54", 54 ^{IV}).

11. Boîte de vitesses (16) de véhicule automobile comprenant un dispositif de changement de vitesses (50, 50", 50^{IV}) selon l'une des revendications 1 à 10.

12. Procédé de montage d'un dispositif de changement de vitesses (50, 50", 50 ^{IV}) pour une boîte de vitesses (16) de véhicule automobile selon l'une des revendications 1 et 2 ou selon l'une des revendications 3, et 7 à 10 en référence à la revendication 1 ou 2,
comprenant les étapes consistant à :
- monter une première tige de changement de vitesses (46, 46', 46^{IV}) par rapport à un carter (54, 54", 54^{IV}) de telle sorte que la première tige de changement de vitesses (46, 46', 46^{IV}) soit mobile dans une direction longitudinale (52) entre une position neutre (N) et au moins une position de rapport (G6, G8),
- monter une deuxième tige de changement de vitesses (70) par rapport au carter (54, 54", 54^{IV}) de telle sorte que la deuxième tige de changement de vitesses (70) soit mobile dans la direction longitudinale (52) entre une position neutre (N) et au moins une position de rapport (G2, G4),
- dans lequel la première tige de changement de vitesses (46, 46', 46^{IV}) comprend une ouverture traversante (92) qui s'étend transversalement à la direction longitudinale (52),
- guider un élément de blocage (82) à travers l'ouverture traversante (92) dans la première tige de changement de vitesses (46) et à l'intérieur d'une partie de guidage transversale (84) à l'intérieur de laquelle l'élément de blocage (82) est monté de manière mobile transversalement à la direction longitudinale (52) et
- relier un élément de butée (100, 100") à la première tige de changement de vitesses (46) ou au carter (54, 54", 54 ^{IV}).

13. Procédé selon la revendication 12, dans lequel l'élément de blocage (82) est tout d'abord guidé à travers une ouverture de carter (118) formée dans le carter (54, 54", 54^{IV}) avant d'être guidé à travers l'ouverture traversante (92) dans la première tige de changement de vitesses (46, 46', 46 ^{IV}).

14. Procédé de montage d'un dispositif de changement de vitesses (50^{IV}) pour une boîte de vitesses (16) de véhicule automobile selon l'une des revendications 4 ou 5 à 10 en référence à la revendication 4, comprenant les étapes consistant à :
- fournir un premier arbre de changement de vitesses (46^{IV}) qui comprend deux parties axiales (130, 132) pouvant être reliées l'une à l'autre, et monter la première partie axiale (130) par rapport à un carter (54) de telle sorte que la première partie axiale (130) soit mobile dans une direction longitudinale (52) le long d'un premier axe de tige de changement de vitesses (134),
- monter un deuxième arbre de changement de vitesses (70) par rapport au carter (54^{IV}) de telle sorte que la deuxième tige de changement de vitesses (70) soit mobile dans la direction longitudinale (52) entre une position neutre et au moins une position de rapport,
- guider un élément de blocage (82) transversalement au premier axe de tige de changement de vitesses (134) à l'intérieur d'une partie de guidage transversale (84) à l'intérieur de laquelle l'élément de blocage (82) est guidé de manière mobile transversalement à la direction longitudinale (52) et
- relier la deuxième partie axiale (132) à la première partie axiale (130) de telle sorte que l'élément de blocage soit mobile dans la direction transversale entre les tiges de changement de vitesses (46^{IV}, 70).
